Europäisches Patentamt

European Patent Office

Office européen des brevets

(11) Publication number: 0 514 979 A2

## EUROPEAN PATENT APPLICATION

(21) Application number: 92201389.1

(22) Date of filing: 15.05.92

(51) Int. Cl.5: G11B 15/675, G11B 15/07

(30) Priority: 20.05.91 JP 44811/91
20.05.91 JP 44810/91

(43) Date of publication of application:
25.11.92 Bulletin 92/48

(84) Designated Contracting States:
DE FR GB IT

(71) Applicant: **N.V. Philips' Gloeilampenfabrieken**
**Groenewoudseweg 1**
**NL-5621 BA Eindhoven(NL)**

(72) Inventor: **Yamaura, Noriaki**
**c/o INT. OCTROOIBUREAU B.V., Prof.**
**Holstlaan 6**
**NL-5656 AA Eindhoven(NL)**
Inventor: **Murakami, Satoru**
**c/o INT.OCTROOIBUREAU B.V., Prof.Holstlaan**
**6**
**NL-5656 AA Eindhoven(nl)**
Inventor: **Okabe, Yoshihiro**
**c/o INT.OCTROOIBUREAU B.V., Prof.Holstlaan**
**6**
**NL-5656 AA Eindhoven(nl)**
Inventor: **Ohki, Isamu**
**c/o INT.OCTROOIBUREAU B.V., Prof.Holstlaan**
**6**
**NL 5656 AA Eindhoven(nl)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Cassette tape recorder.**

(57) A cassette tape recorder for cooperation with both an analog compact cassette (10) and a digital compact cassette (11) with a dust-protection-cover (9) comprises a dust-protection-cover slide arm (4; 104) and a tape discrimination piece (5; 105). A slide link (6; 106) is with one end provided on the slide arm (4; 104) and is constructed to be pivotable in a direction (D) of movement of the cassette tape (10, 11) to allow the slide arm to open the dust-protection-cover (9).

The invention relates to a cassette tape recorder wherein both of an analog compact cassette tape (hereinafter referred to as "ACC") and a digital compact cassette tape (hereinafter referred to as "DCC") with a dust-protection-cover are recordable/readable, which recorder comprises a dust-protection-over slide arm and a tape discrimination piece.

The digital audio cassette tape recorder (hereinafter referred to as "DAT" recorder) wherein reading and recording is performed with a digital signal has a complicated construction and is expensive because it uses a rotary head.

A cassette tape recorder which uses the ACC is now widely spread because of its easy operation.

However, since there is no compatibility between both of the tape recorders, a cassette tape recorder which is used exclusively for the DAT and that exclusively for the ACC are required to record on and reproduce from those tapes.

Therefore, realization of a cassette tape recorder which has a simple construction and has compatibility between the ACC and the DAT in recording/reading has been expected.

In order to use the ACC and the DAT in common in one cassette tape recorder, it is basically required that the shape, thickness, etc. of the DAT be substantially the same as those of the ACC to the extent that the DCC can operate in common with the ACC. On the other hand, it is needed that such shapes of the ACC and the DAT are different from each other to such extent that it can be detected whether the cassette is the ACC or the DAT when it is put on or inserted in a tray of the cassette tape recorder.

Then, a compact cassette incorporating a digital tape (hereinafter referred to as "DCC") which is adaptable to a cassette tape recorder system of the ACC (including operation system) was developed. The DCC has a new construction, which is completely different from that of the DAT.

The ACC has windows which are necessary for bringing a head into contact with the magnetic tape and for other purposes. But, the DCC is easily affected by the dust, and when it is removed from the cassette tape recorder, the dust entering through the window could be the reason of an error in recording/reproducing. Therefore such windows should be covered by a dust-protection-cover under such conditions.

An object of the invention is to provide a cassette tape recorder wherein both of an analog compact cassette tape and a digital compact cassette tape with a dust-protection-cover are compatibly readable/recordable.

In order to solve the above object, the invention is characterized in that at least one slide link is arranged on the slide arm in such a way that one end of the link engages with said slide arm; and in that said slide link is constructed to be pivotable over a predetermined angle in the direction of movement of the cassette tape.

A preferred embodiment is characterized in that a plate movable in the upward and downward directions is provided on a frame plate for guiding a cassette; and in that the dust-protection-cover slide arm, the tape discrimination piece and the other end of the slide link are provided on the plate.

Another preferred embodiment is characterized in that a second slide link is arranged on the slide arm in such a way that one end of the second link engages with said slide arm; and in that said second slide link is constructed to be pivotable over a predetermined angle in the direction of movement of the cassette tape.

Because there is a difference in shape between the ACC and the DCC (every ACC has a protrusion part, which is specified under the standard, in the center of the tape-exposing side as shown in Fig. 2a and Fig. 2b), when the ACC is loaded it is detected by the discrimination piece (the discrimination piece runs onto the protrusion part of the ACC). Therefore, the ACC is loaded in such a way that the plate which is formed integrally with the tape discrimination piece shifts upward, so that the shaft also shifts up, whereby the slide mechanism does not operate. When the DCC is loaded, it is not detected by the discrimination piece (because it has no such protrusion part as the ACC has, the discrimination piece does not run thereonto). Therefore, the shaft engages with a cut-out part of the DCC in the process of loading and shifts along an edge of the cut-out part, pushing the dust-protection-cover, whereby the dust-protection-cover is slid and opened.

Thus, after the ACC or the DCC is detected in one cassette tape recorder, both types of tapes can be recorded/read.

Brief explanation of Figures:

Fig. 1, a top view showing a first embodiment according to the invention,

Fig. 2a, a front view according to the invention which is seen from the head-side where the ACC is loaded,

Fig. 2b, a side view where the ACC is loaded,

Fig. 3a, a front view seen from the head-side where the DCC is loaded and the dust-protection-cover is not yet opened,

Fig. 3b, a side view where the DCC is loaded. It shows the status wherein the shaft 5a gets into the inside of the DCC and the dust-protection-cover is opened,

Fig. 4, a top view of the DCC of which dust-protection-cover is closed,

Fig. 5, a top view of the DCC of which dust-protection-cover is opened,

Fig. 6, a rear view of Fig. 4,

Fig. 7, a rear view of Fig. 5,

Fig. 8, a top view showing a second embodiment according to the invention,

Fig. 9a, a front view according to the invention which is seen from the head-side where the ACC is loaded,

Fig. 9b, a side view where the ACC is loaded,

Fig. 10a, a front view seen from the head-side where the DCC is loaded and the dust-protection-cover is not yet opened, and

Fig. 10b, a side view where the DCC is loaded. It shows the status wherein the shaft 105a gets into the inside of the DCC and the dust-protection-cover is opened.

Embodiments of the invention are explained below by referring to the drawings.

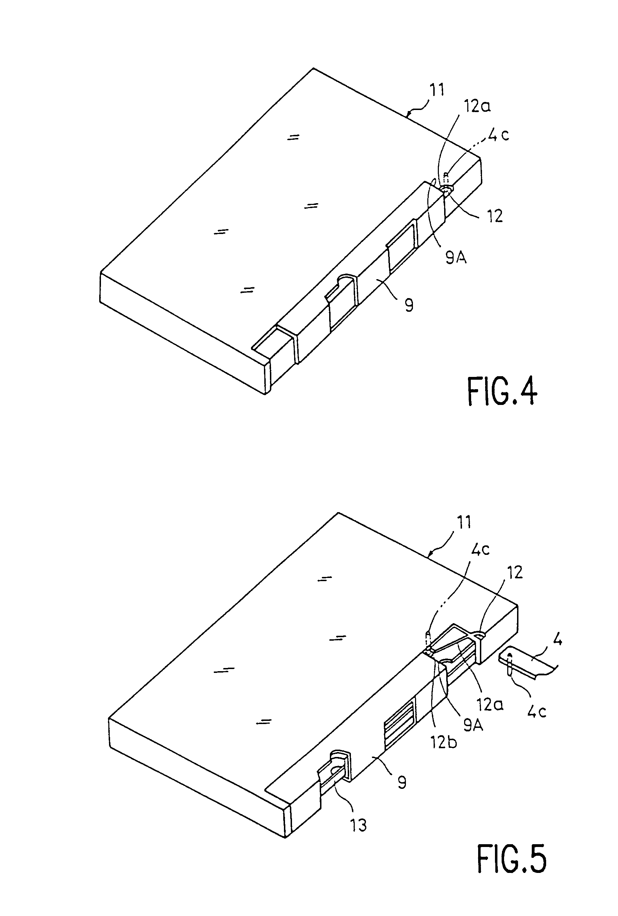

Fig. 4 to Fig. 7 show the shape of a DCC, which is newly developed to be applied to a cassette tape recorder according to the invention, in the respective states.

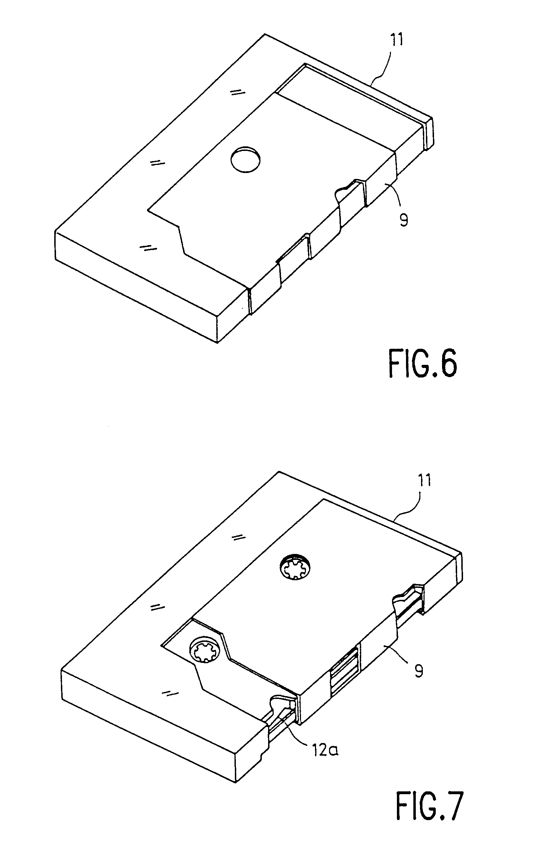

Fig. 4 and Fig. 5 are perspective views of the DCC. More in detail, Fig. 4 shows it in a status wherein a dust-protection-cover 9 of the DCC is pushed and closed by resilient means (not shown). Fig. 5 shows the DCC in a status wherein the DCC is inserted in the cassette tape recorder, and a shaft 4a of a dust-protection-cover slide arm 4 is engaged with a cut-out part 12 (as shown in Fig. 4). Then, the shaft 4a shifts along the cut-out taper part 12a and makes the dust-protection-cover 9 slide against the resilient means. Then, the shaft 4c is locked at a stopping groove 12b, and the dust-protection-cover 9 is opened, whereby the DCC is ready for a magnetic head and a drive mechanism (not shown). Fig. 6 and Fig. 7 are rear views of Fig. 4 and Fig. 5 respectively.

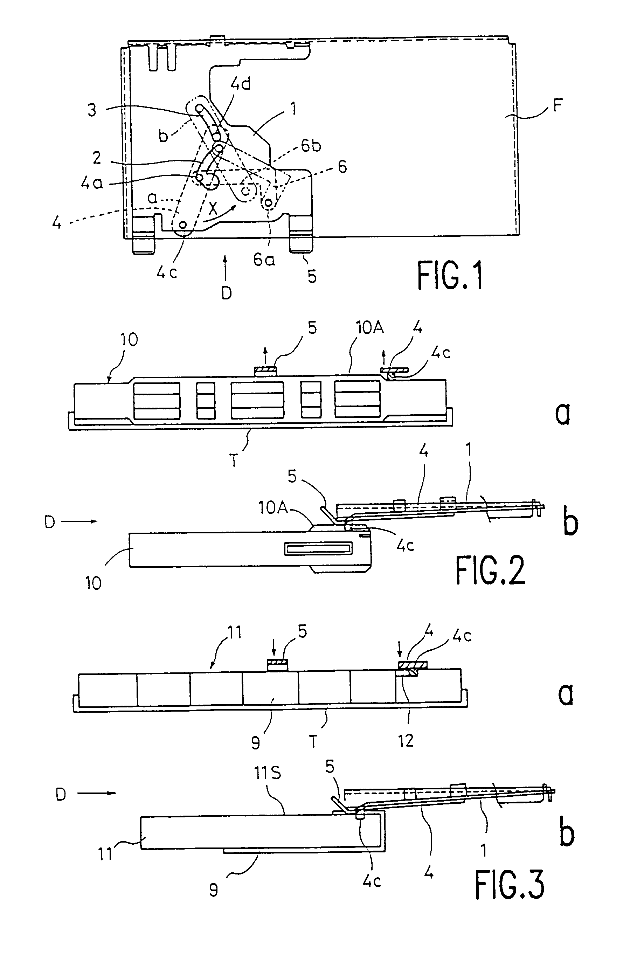

Fig. 1 is a top view of the relevant portion of a first embodiment of the cassette tape recorder according to the invention. F denotes a guide frame and 1 denotes a plate which is fitted movably in the upward and downward directions (for making a rattle) to the guide frame F. The plate 1 has a first guide hole 2 and a second guide hole 3 which have curved shapes and are adjacent to each other. In the first guide hole 2 and in the second guide hole 3, the dust-protection-cover slide arm 4 which is long and slender in shape is fitted slidably via shafts 4a and 4d. At one end of this dust-protection-cover slide arm 4, a shaft 4c which slides the dust-protection-cover is provided.

At the dust-protection-cover slide arm 4, a slide link 6 is provided, of which one end is engaged with the arm 4 via the shaft 4a and of which other end is pivotally coupled to the plate via a shaft 6a. When a cassette tape is not loaded, the dust-protection-cover slide arm 4 is located at a position "a" and the slide link 6 is located at a position "b". The arrow D shows the direction in which the tape is loaded. The tape discrimination piece 5 provided on the plate 1 detects the ACC 10 when it is loaded (the discrimination piece 5 is shifted upward by the protrusion 10a of the ACC) and does not allow the slide mechanism (such as the slide arm 4, the slide link 6, etc.) to operate. Only when the DCC is loaded, the shaft 4c is engaged with a cut-out part 12 of the DCC and the dust-protection-cover slide arm 4 shifts from the position "a" to the position "b", describing a locus in the arrow direction X as shown in Fig. 1. The plate 1 which supports the discrimination piece 5 and the dust-protection-cover slide arm 4, etc. has a rattle whereby it can shift upward and downward to the surface contacted with the ACC or the DCC when they are detected.

Next, the operation of the first embodiment is explained. Fig. 2a is a front view wherein the ACC 10 being put on the tray T is inserted in the direction of the magnetic head (not shown). It also shows the status wherein the tape discrimination piece 5 formed integrally with the plate 1 runs onto the protrusion part 10a of the ACC, and therefore the shaft 4c shifts upward and is not in contact with the surface of the ACC 10. Fig. 2b is a side view wherein the ACC 10 is loaded in the cassette tape recorder. More in detail, Fig. 2b shows the status wherein the ACC 10 is loaded in the arrow direction D, and the tape discrimination piece 5 runs onto the protrusion 10a as described before (the dust-protection-cover slide arm 4 shifts upward). Thus, Fig. 2b clearly shows that the ACC 10 is loaded without the shaft 4c being in contact with the surface of the ACC (the dust-protection-cover slide arm 4 is located at the position "a" of Fig. 1).

Fig. 3a is a front view wherein the DCC 11 is inserted in the direction of the magnetic head (not shown) and this time the situation is different from that of the ACC. Since the DCC 11 does not have the protrusion part 10a and is flat, the tape discrimination piece 5 stays in the lower position according to the rattle (in the arrow direction) and therefore the shaft 4c does not shift upward but is engaged with the cut-out part 12 of the DCC 11 as shown in Fig. 3a (in Fig. 3a, the shaft 4c is just engaged with the cut-out part 12, so the dust-protection-cover 9 is still closed). Fig. 3b is a side view wherein the DCC is loaded in the cassette tape recorder. In this case, as shown in Fig. 5, the shaft 4c (which is indicated by a imaginary line) shifts along a cut-out taper part 12a and is locked at a stopping groove 12b, and the dust-protection-cover 9 is opened. As seen from Fig. 3b, the shaft 4c gets into the DCC. That is, when the DCC 11 is loaded in the direction of D, the tape discrimination piece 5 shifts downward according to the rattle and contacts directly a surface 11S of the DCC, and the shaft 4c is engaged with the cut-out part 12. When the DCC 11 shifts more into the inner part, the shaft 4c starts shifting along the taper portion of the cut-out part 12 and is in contact with an end part 9a of the dust-protection-cover 9. Now, as described before, the dust-protection-over 9 is opened with the shaft 4c shifting more.

Thus, as the shaft 4c shifts, by the shafts 4a and 4b (the shaft 4a is connected with the slide link 6 of which the other end is pivotally coupled at 6a to the plate 1), the dust-protection-cover slide arm 4 shifts along the first and second holes 2 and 3, against the force of a spring (resilient means provided between the shafts 4d and 4a, but not shown). Thus, the dust-protection-cover slide arm 4 shifts from the position "a" to the position "b", describing a locus in the direction X as shown in Fig. 1. When the loading of the DCC 11 is finished, the dust-protection-cover 9 of the DCC 11 is completely slid as shown in Fig. 5 and the tape 13 is exposed. At this time, the shaft 4c is positioned at the stopping groove 12b which is provided at the end of the cut-out part 12, thus lightly locked, and pushing an end part 9a of the dust-protection-cover 9.

When the DCC is to be removed, the locked status is released by pulling the DCC in the opposite direction to the direction D. The dust-protection-cover slide arm 4 shifts from the position "b" via the shaft 4c to the position "a" in the direction X, against the force caused by the spring 8, describing a locus. By this, the dust-protection-cover 9 operates to protect the tape as shown in Fig. 4 according to the force of resilient means (not shown) provided in the DCC 11, as a result of the shaft 4c returning along the cut-out taper portion 12a to the original position.

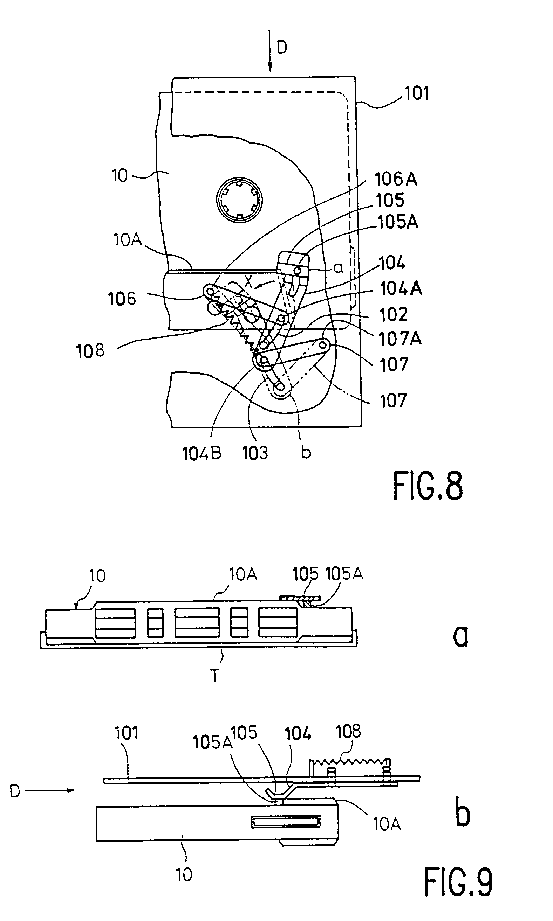

Fig. 8 is a top view of the relevant portion of a second embodiment of the cassette tape recorder according to the invention.

101 denotes a base plate which is illustrated with a portion thereof cut intentionally in order to show the inner system for a good understanding. Therefore the movable parts, etc. explained below look like floating but it should be understood that they are practically supported by or provided at the rear surface of the base plate 101. The plate 101 has a first guide hole 102 and a second guide hole 103 which have curved shapes and are adjacent to each other. In the first guide hole 102, the dust-protection-cover slide arm 104 which is long and slender in shape is fitted slidably via a shaft 104a. At one end of this dust-protection-cover slide arm 104, a shaft 105a which slides the dust-protection-cover 104 and a tape discrimination piece 105 which supports the shaft 105a are provided.

At one end of the dust-protection-cover slide arm 104, a first dust-protection-cover slide link 106 is provided, of which one end is engaged with the arm 104 via the shaft 104a and of which other end is pivotally coupled to the base plate 101, via a shaft 106a. At the other end of the arm 104, a second dust-protection-cover slide link 107 is provided, of which one end is engaged with the arm 104 via the shaft 104b and of which other end is pivotally coupled to the base plate 101 via a shaft 107a. A spring 108 is provided between one end 104b of the second dust-protection-cover slide link 107 and the shaft 106a of the first dust-protection-cover slide link 106 which is fixed to the base substrate 101. The dust-protection-cover slide arm 104 is located at a position "a" by the force of the spring 108 when the tape is not loaded.

The arrow D shows the direction in which the tape is loaded and Fig. 8 shows the status wherein ACC 10 is loaded, as an example. The tape discrimination piece 105 detects the ACC when it is loaded (the discrimination piece 105 shifts upward by the protrusion 10a of the ACC) and does not allow the slider mechanism to operate. Only when the DCC is loaded, the shaft 105a is engaged with a cut-out part 12 of the DCC (see figure 4) and the dust-protection-cover slide arm 104 shifts to the position "b", describing a locus in the arrow direction X as shown in Fig. 8. The dust-protection-cover slide arm 104 has a rattle whereby it can shift upward and downward to the surface contacted with the ACC or the DCC when they are detected.

Next, the operation of the second embodiment is explained. Fig. 9a is a front view wherein the ACC 10 being put on the tray T is inserted in the direction of the magnetic head (not shown). It also shows the status wherein the tape discrimination piece 105 formed integrally with the dust-protection-cover slide arm 104 runs onto the protrusion part 10a of the ACC, and therefore the shaft 105a shifts upward and is not in contact with the surface of the ACC 10. Fig. 9b is a side view wherein the ACC 10 is loaded in the cassette tape recorder. More in detail, Fig. 9b shows the status wherein the ACC 10 is loaded in the arrow direction D, and the tape discrimination piece 105 runs onto the protrusion 10a as described before (the dust-protection-cover slide arm 104a shifts upward). Thus, Fig. 9b clearly shows that the ACC 10 is loaded without the shaft 105a being in contact with the surface of the ACC (the dust-protection-cover slide arm 104 is located at the position "a" of Fig. 8).

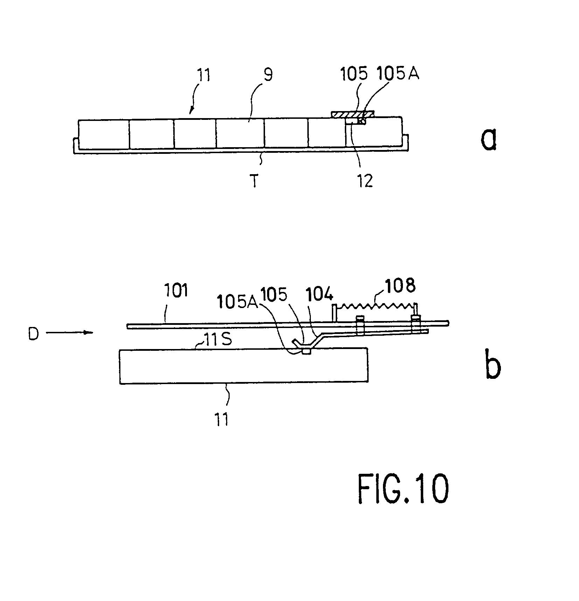

Fig. 10a is a front view wherein the DCC 11 is inserted in the direction of the magnetic head (not shown) and this time the situation is different from that of the ACC. Since the DCC 11 does not have the protrusion part 10a and is flat, the tape discrimination piece 105 stays in the lower position according to the rattle (in the arrow direction) and therefore the shaft 105a does not shift upward but is engaged with the cut-out part 12 of the DCC 11 as shown in Fig. 10a (in Fig. 10a, the shaft 105a is just engaged with the cut-out part 12, so the dust-protection-cover 9 is still closed). Fig. 10b is a side view wherein the DCC is loaded in the cassette tape recorder. In this case, as shown in Fig. 5, the shaft 105a corresponds with shaft 4c (which is indicated by a imaginary line) and shifts along a cut-out taper part 12a and is locked at a stopping groove 12b, and the dust-protection-cover 9 is opened. As seen from Fig. 10b, the shaft 105a gets into the DCC, That is, when the DCC 11 is loaded in the direction of D, the tape discrimination piece 105 shifts downward according to the rattle and contacts directly a surface 11S of the DCC, and the shaft 105a is engaged with the cut-out part 12.

When the DCC 11 shifts more into the inner part, the shaft 105a starts shifting along the taper portion of the cut-out part 12 and is in contact with an end part 9a of the dust-protection-cover 9. Now, as described before, the dust-protection-cover 9 is opened with the shaft 105a shifting more.

Thus, as the shaft 10a shifts, the relative mechanism shifts from the position indicted by a solid line to that indicated by an imaginary line as shown in Fig. 8. By the shafts 104a and 104b (the shaft 104a is connected with the first dust-protection-cover slide link 106 of which the other end is pivotally coupled at 106a to the base plate 101, and the shaft 104b is connected with the second dust-protection-cover slide link 107 of which the other end is pivotally coupled at 107a to the base plate), the dust-protection-cover slide arm 104 shifts along the first and second holes 102 and 103, against the force of the spring 108 spanned between the shafts 106a and 104b as the links 106 and 107 shift. Thus, the dust-protection-cover slide arm 104 shifts to the position "b", describing a locus in the direction X as shown in Fig. 8. When the loading of the DCC 11 is finished, the dust-protection-cover 9 of the DCC 11 is completely slided as shown in Fig. 5 and the tape 13 is exposed. At this time, the shaft 105a is positioned at the stopping groove 12b which is provided at the end of the cut-out part 12, thus lightly locked, and pushing an end part 9a of the dust-protection-cover 9.

As described above, according to the invention, when the DCC with the dust-protection-cover is detected by the tape discrimination piece which is formed integrally with the dust-protection-cover slide arm or with the plate having a rattle whereby it can shift upward and downward to the plate, the dust-protection-cover slide arm shifts, describing a locus and causes the dust-protection-cover to slide. Thus, a cassette tape recorder which has a simple structure and wherein ACC and DCC is compatibly readable/recordable can be obtained.

**Claims**

1. A cassette tape recorder wherein both of an analog compact cassette tape and a digital compact cassette tape with a dust-protection-cover are recordable/readable, which recorder comprises a dust-protection-cover slide arm having a shaft for sliding the dust-protection-cover and a tape discrimination piece characterized in that at least one slide link is arranged on the slide arm in such a way that one end of the link engages with said slide arm; and in that said slide link is constructed to be pivotable over a predetermined angle in the direction of movement of the cassette tape.

2. A cassette tape recorder as claimed in claim 1 characterized in that a plate movable in the upward and downward directions is provided on a frame plate for guiding a cassette; and in that the dust-protection-cover slide arm, the tape discrimination piece and the other end of the slide link are provided on the plate.

3. A cassette tape recorder as claimed in claim 1, characterized in that a second slide link is arranged on the slide arm in such a way that one end of the second link engages with said slide arm; and in that said second slide link is constructed to be pivotable over a predetermined angle in the direction of movement of the cassette tape.

FIG.1

FIG.2

FIG.3

FIG.4

FIG.5

FIG.6

FIG.7

FIG.8

a

b

FIG.9

FIG.10